# FASCICULE DE BREVET EUROPEEN

(11) **EP 1 288 121 B1**
(45) Date de publication et mention de la délivrance du brevet: **09.11.2005**
(21) Numéro de dépôt: 02356166.5
(22) Date de dépôt: 29.08.2002
(51) Int. Cl.: B63B 9/00, B29C 73/34, B29C 73/24, B32B 35/00

(54) **Procédé et installation de traitement d'une coque de bateau**
Verfahren und Einrichtung zur Behandlung eines Bootskörpers
Method and installation for treating a boat hull

(30) Priorité: 31.08.2001 FR 0111346
(43) Date de publication de la demande: 05.03.2003
(73) Titulaire: Labat, Sébastien Pierre, 97220 Trinite (FR)
(72) Inventeur: Labat, Sébastien Pierre, 97220 Trinite (FR)
(74) Mandataire: Myon, Gérard Jean-Pierre

(56) Documents cités:
- GB-A- 2 346 158
- US-A- 5 622 661

## Description

L'invention a trait à un procédé et à une installation de traitement d'une coque de bateau par son côté externe, en particulier pour le traitement du phénomène dit « d'osmose » des coques réalisées en stratifié de fibres de verre et d'une résine à base de polyester.

Il est connu des professionnels et des plaisanciers que les coques de bateau construites en fibres de verre et en résine à base de polyester sont généralement saturées en eau au bout d'une période de cinq à dix ans de stationnement dans l'eau. En effet, l'eau a tendance à s'infiltrer à travers le gel-coat recouvrant une coque de bateau, de sorte qu'elle est piégée au contact des couches de stratifié. L'eau et la résine en contact forment de l'acide acétique. Ce dernier étant en concentration importante, il exerce une forte pression qui sépare les couches de tissus et de gel-coat en formant des cloques à la surface de la coque. Lorsqu'une coque est altérée par ce phénomène, il est important de remédier à ce problème avant que toutes les fibres de verres ne se séparent les unes des autres et que la coque ne soit atteinte de façon irréversible.

Pour traiter ce problème, on sort le bateau de l'eau et la coque est pelée, par abrasion ou par sablage, afin de retirer la couche de gel-coat pour accélérer le séchage et éliminer les cloques les plus importantes. La coque doit être séchée de façon aussi parfaite que possible afin que toute l'eau infiltrée et tout l'acide acétique créé soient évacués, avant l'application d'un nouveau traitement.

Il est d'usage d'utiliser un séchage naturel pour les coques de bateau, c'est-à-dire de laisser un bateau à l'air libre, sur une aire de stationnement, pendant une période généralement comprise entre deux et huit mois. Cette pratique a pour conséquence un encombrement important des chantiers navals et induit des frais de stationnement coûteux pour le propriétaire du bateau concerné. Le bateau en question n'est pas disponible pendant la période de séchage, ce qui induit une baisse de rentabilité des bateaux appartenant à des agences de location et une indisponibilité des bateaux appartenant à des particuliers. En outre, dans le cas de bateaux habitables, les occupants doivent se reloger pendant la période de séchage, ce qui induit des coûts supplémentaires. Enfin, le temps de séchage dépend de la météorologie et de l'humidité ambiante et ne peut donc pas être garanti au début du traitement de la coque.

Il n'est pas économiquement envisageable de confiner les bateaux dans des hangars protégés contre la pluie et dont l'atmosphère serait contrôlée car ceci induirait la construction de bâtiments de grandes tailles avec des frais importants de traitement de grands volumes d'air.

Il est par ailleurs connu de GB-A-2 346 158, qui divulgue un procédé selon le préambule de la revendication 1 et une installation selon le préambule de la revendication 3, de recouvrir d'un film imperméable une partie endommagée d'une coque de bateau en vue de son séchage. Il est difficile d'accéder à la zone endommagée lorsque le film est en place, ce qui gêne les contrôles à effectuer et impose de retirer ce film avant les étapes de traitement postérieures au séchage. En outre, la circulation de l'air au voisinage de la partie de la coque en traitement n'est pas contrôlée. Enfin, lorsqu'un séchage complet de la coque est nécessaire ou lorsque plusieurs parties sont endommagées, plusieurs manipulations sont nécessaires.

C'est à ces inconvénients qu'entend plus particulièrement remédier l'invention en proposant un procédé de traitement par séchage d'une coque de bateau qui est aisé à mettre en oeuvre, moins long et plus prévisible que le séchage naturel, sans nécessiter la construction de bâtiments onéreux.

Dans cet esprit, l'invention concerne un procédé de traitement d'une coque de bateau, ce procédé comprenant, entre autres, une étape consistant à sécher la coque par son côté externe. Ce procédé est caractérisé en ce que, lors de l'étape de séchage, on isole au moins la partie à sécher de la coque par rapport à l'atmosphère ambiante au moyen d'une enceinte étanche immobilisée sur la coque et qui s'étend autour de la coque depuis le sol au moins jusqu'à la ligne de flottaison du bateau, en ce qu'on assèche l'air contenu dans le volume intérieur de cette enceinte et en ce qu'on fait circuler l'air contenu dans l'enceinte en dirigeant un flux d'air sec vers la partie de coque à sécher et en évacuant de l'air humide vers l'extérieur de l'enceinte.

Par étanche, on entend que l'enceinte isole des intempéries et de l'humidité ambiante. Elle peut cependant laisser passer de l'air, par exemple au niveau des ouvertures où des fuites légères peuvent exister.

L'invention tire parti du fait qu'il suffit de contrôler l'humidité de l'air dans le volume intérieur de l'enceinte étanche, qui est formée uniquement autour de la partie inférieure de la coque du bateau, pour sécher efficacement cette coque, cette enceinte pouvant être construite sans utilisation d'une structure externe, en s'appuyant sur la coque elle-même. Le caractère étanche de l'enceinte permet de limiter l'apport d'air extérieur au contact de la coque et de mettre en dépression le volume intérieure de l'enceinte, ce qui augmente l'efficacité de la circulation d'air visant à extraire l'humidité de la coque. Le fait que l'enceinte étanche est construite sur la coque permet d'en adapter les dimensions en fonction de celles de la coque, de sorte que son volume interne est optimisé, sans être trop important, ce qui limite le coût énergétique du traitement de l'air. Le volume intérieur de l'enceinte permet l'entrée du personnel pour le contrôle du processus de séchage et, une fois ce séchage terminé, l'application de produits de traitement et de réfection de la coque jusqu'au niveau du gel-coat, éventuellement en atmosphère contrôlée. En outre, le fait que l'enceinte entoure la coque permet de traiter la coque en une seule étape.

Selon un aspect avantageux de l'invention, on fait circuler l'air, de telle sorte que le volume intérieur de l'enceinte est en dépression par rapport à l'atmosphère ambiante.

L'invention concerne également une installation permettant de mettre en oeuvre le procédé précédemment décrit et, plus spécifiquement une installation de traitement d'une coque de bateau par séchage qui comprend :
- une enceinte étanche comprenant une première bâche apte à être immobilisée autour de la coque, en s'étendant depuis le sol au moins jusqu'au niveau de la ligne de flottaison du bateau, cette enceinte isolant alors au moins la partie à sécher de la coque par rapport à l'atmosphère ambiante et
- des moyens pour assécher l'air contenu dans le volume intérieur de cette enceinte.

L'invention sera mieux comprise et d'autres avantages de celle-ci apparaîtront plus clairement à la lumière de la description qui va suivre de deux modes de réalisation d'une installation conforme à son principe et d'un procédé de traitement mis en oeuvre avec cette installation, donnée uniquement à titre d'exemple et faite en référence aux dessins annexés dans lesquels :

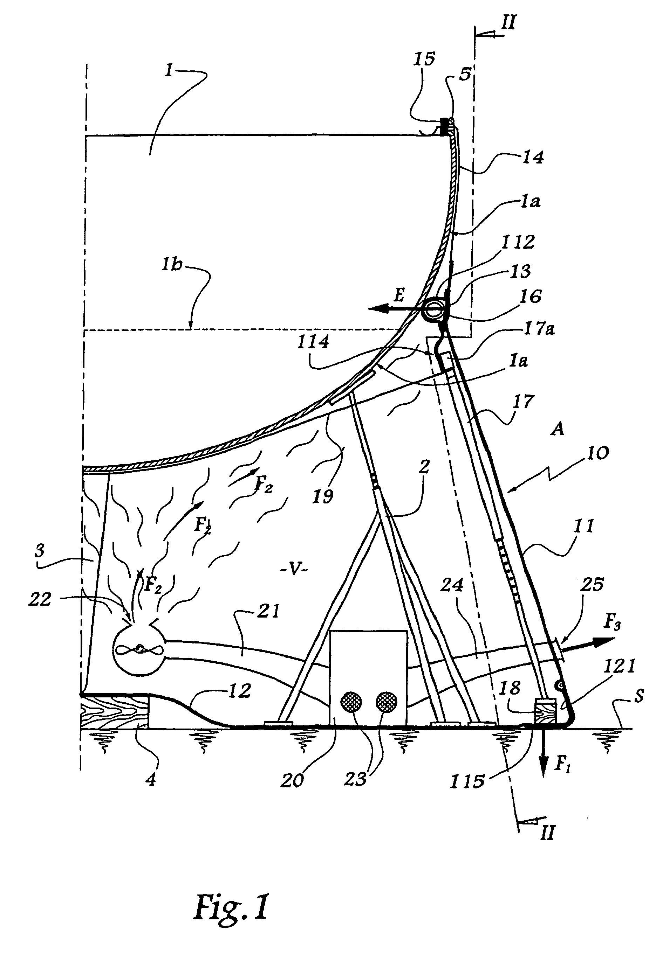

- La figure 1 est une coupe transversale de principe d'une installation de traitement d'une coque de bateau en cours de traitement grâce au procédé de l'invention ;

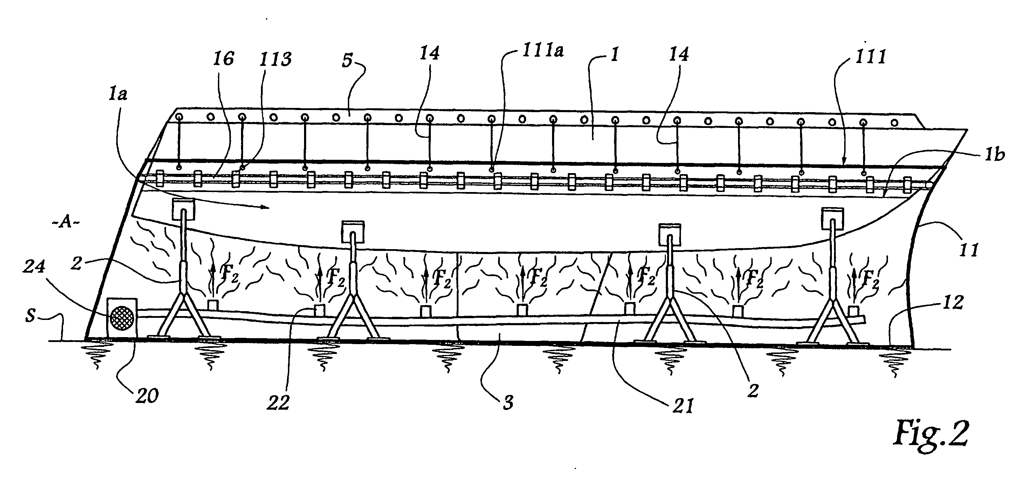

- La figure 2 est une coupe de principe à plus petite échelle selon la ligne II-II à la figure 1 ;

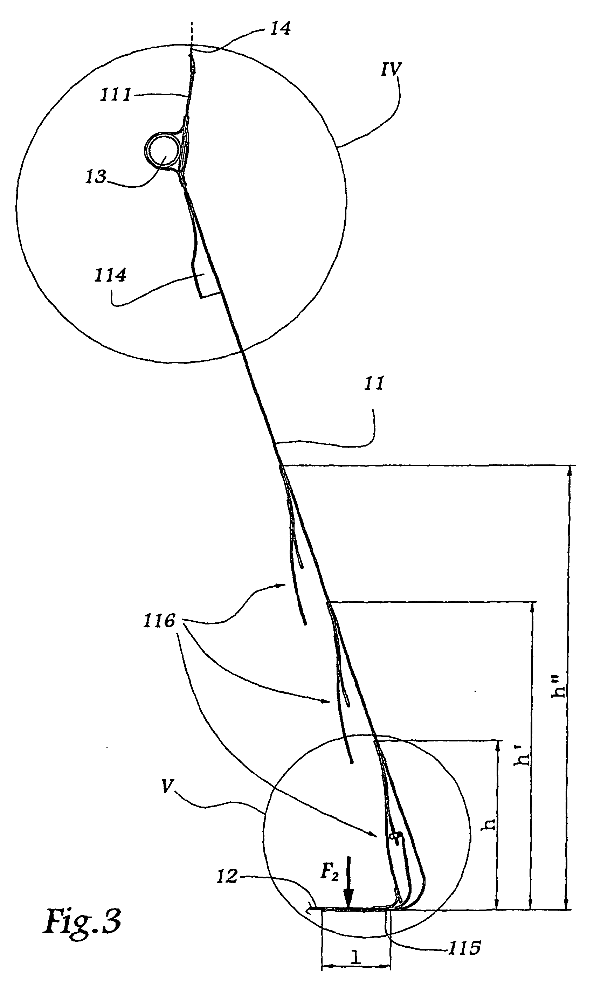

- La figure 3 est une vue de principe, dans le plan de la figure 1, de bâches appartenant à l'enceinte étanche représentée aux figure 1 et 2 ;

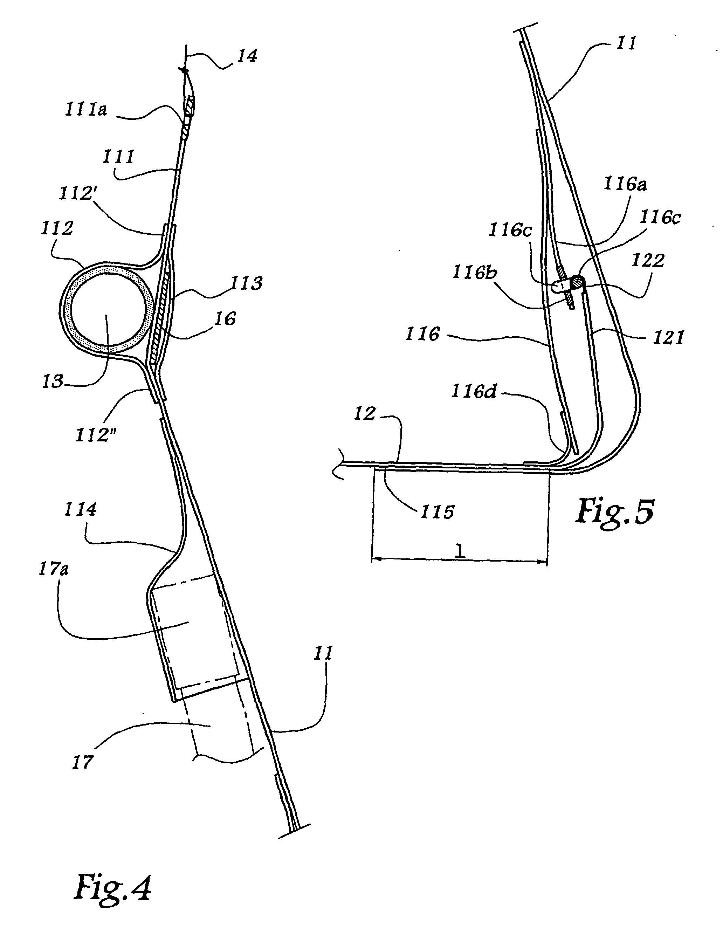

- La figure 4 est une vue à plus grande échelle du détail IV à la figure 3 ;
- La figure 5 est une vue à plus grande échelle du détail V à la figure 3 ;

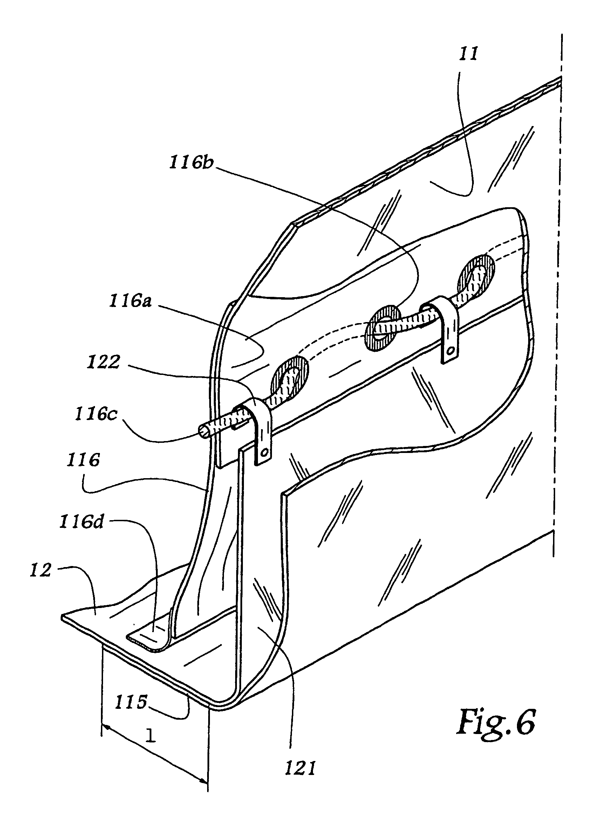

- La figure 6 est une vue en perspective, avec arrachement partiel, du détail V ;
- La figure 7 est une représentation de principe d'une bâche utilisée dans l'enceinte visible à la figure 1 ;
- La figure 8 est une coupe de principe selon la ligne VIII-VIII à la figure 7 et ;

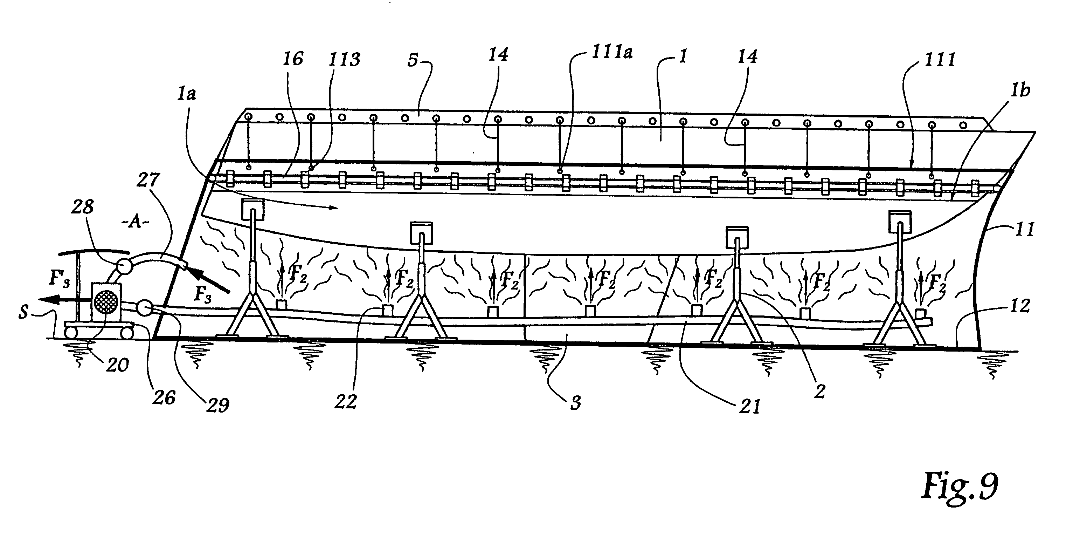

- La figure 9 est une coupe analogue à la figure 2 pour une installation conforme à un second mode de réalisation de l'invention.

Lors du traitement de l'osmose d'une coque de bateau 1, tout particulièrement de sa partie 1a située en-dessous de sa ligne de flottaison 1b, on retire le gel-coat recouvrant la partie 1a par tout moyen adapté, par exemple par abrasion.

Pour ce faire, la coque 1 est supportée par des étais 2 au-dessus de la surface S du sol, la quille 3 de la coque 1 reposant sur une cale 4 de forme adaptée.

Lorsqu'il convient de faire sécher la coque 1 avant apposition d'un nouveau traitement, on isole la partie 1a par rapport à l'atmosphère ambiante A au moyen d'une enceinte 10 comprenant une bâche périphérique 11 et une bâche de sol 12.

La bâche 12 est destinée à être posée sur la surface du sol S avant mise en place des étais 2 et de la coque 1, la bâche 12 recouvrant la cale 4. Les dimensions de la bâche 12 sont adaptées à celles de la coque 1, notamment en ce qui concerne sa longueur et sa largeur.

Cette bâche peut être réalisée dans une toile enduite d'épaisseur relativement importante, par exemple avec une masse surfacique de 500 g/m², de telle sorte qu'elle résiste aux agressions du sol et aux interventions des personnes travaillant sous la coque 1. Cette bâche est avantageusement choisie résistante au feu.

La bâche périphérique 11 peut être plus légère que la bâche 12, avec une masse surfacique de l'ordre de 150 à 300 g/m² tout en étant également résistante au feu.

La bâche 11 est prévue pour être immobilisée sur la coque 1 en s'étendant jusque au niveau du sol S. La bâche 11 porte, au niveau de son bord supérieur 111 un manchon 112 dans lequel est introduit un boudin gonflable 13 destiné à venir en appui contre la coque 1, au-dessus de la ligne de flottaison 1b. Ainsi, la bâche 11 s'étend, à partir du sol, jusqu'au dessus de la ligne 1b mais la coque 1 n'est pas totalement recouverte par l'enceinte 10. En d'autres termes, la coque 1 n'est isolée que partiellement de l'atmosphère ambiante, dans sa partie inférieure.

Plusieurs gansettes 14 relient le bord 111 de la bâche 11 à la partie supérieure 1c de la coque 1, chaque gansette étant pourvue d'un dispositif 15 de mise en tension et de réglage. En pratique, les gansettes 14 peuvent permettre de suspendre la bâche 11 au rail de fargue du bateau.

Les différentes gansettes 14 prévues sur la périphérie de la coque 1 sont réglées de façon à donner une légère inclinaison au boudin 13, de l'avant vers l'arrière de la coque 1, afin d'éviter une stagnation de l'eau de pluie entre le boudin 13 et la coque 1. Des oeillets 111a permettent d'accrocher les gansettes 14 au bord 111 de la bâche 11.

Le manchon 112 est relié à la partie principale de la bâche 11 par des coutures 112' et 112''. Ces coutures pourraient être remplacées par des zones de collage.

Une sangle 16 est disposée autour du boudin 13 en étant guidée par des passants 113. Cette sangle permet de mettre en pression le boudin 13 contre la coque 1, en exerçant sur le boudin 13 un effort E dirigé vers le centre de la coque. Elle comprend des boucles de serrage non représentées qui sont disposées à intervalles réguliers, par exemple tous les trois mètres, pour la tendre. La sangle 16 permet donc de fixer la bâche 11 par une pression mécanique externe à l'enceinte 10, sans utilisation de ruban adhésif ou de mastic susceptible d'endommager la coque.

Comme l'enceinte 10 et la bâche 11 s'élèvent jusqu'au dessus de la ligne de flottaison 1b, l'isolation obtenue grâce au boudin 13 et à l'effort E a lieu au niveau du gel-coat sain qui est demeuré hors d'eau lors de l'utilisation du bateau.

Au niveau de la poupe des bateaux équipés d'un décroché formant plage d'accès à la mer, le boudin 13 peut ne pas plaquer sur la coque 1. Dans ce cas, il peut être prévu un boudin gonflable complémentaire s'adaptant à la géométrie de ce décroché.

La bâche 11 est également pourvue, sur sa face intérieure tournée vers la quille 3, de plusieurs fourreaux, dont un seul apparaît sur les figures avec la référence 114. Ces fourreaux sont destinés à recevoir l'extrémité supérieure 17a de barres télescopiques, dont une seule apparaît sur les figures avec la référence 17.

Ces barres télescopiques sont disposées à l'intérieur de l'enceinte 10, le long de la bâche 11 en prenant appui sur un ou plusieurs madriers 18 posés sur la zone de recouvrement des bâches 11 et 12. Le poids combiné du madrier 18 et des différentes barres 17 exerce un effort F₁ d'immobilisation des bâches 11 et 12 l'une par rapport à l'autre.

Le caractère télescopique des barres 17 permet d'en adapter la longueur en fonction de la hauteur de l'enceinte 10, selon la hauteur de la ligne de flottaison 1b par rapport à la quille 3.

Un bout 19 permet de relier deux à deux les barres télescopiques disposées de part et d'autre de la coque 1, ce qui contribue au maintient en position de l'enceinte 10.

Le bord inférieur 115 de la bâche 11 constitue un rabat destiné à être engagé sous la bâche 12, sur une largeur l de l'ordre de 30 cm.

Par ailleurs, la bâche 11 est pourvue, sur sa face tournée vers l'intérieur de l'enceinte 10, de rabats 116 se rattachant à la bâche 11 à des hauteurs h, h', h'', différentes correspondant à différentes hauteurs de la ligne de flottaison 1b par rapport au sol lorsque la coque 1 repose sur les étais 2. En fonction de la hauteur de la ligne 1b, on appose l'un des rabats 116 sur le bord latéral 121 de la bâche 12 avant de mettre en place le madrier 18, ce qui améliore encore l'étanchéité obtenue dans la zone de recouvrement.

Les rabats 116 peuvent être cousus ou collés sur la bâche 11 et sont chacun pourvus d'une lèvre comportant des oeillets 116b ou des passants. Ces oeillets ou passants permettent de passer une cordelette 116c ou un tendeur pour coopérer avec des crochets 122 prévus sur le bord 121 de la bâche 12.

Une bande 116d de ruban adhésif peut être utilisée pour immobiliser le rabat 116 sur le bord 121 de la bâche 12.

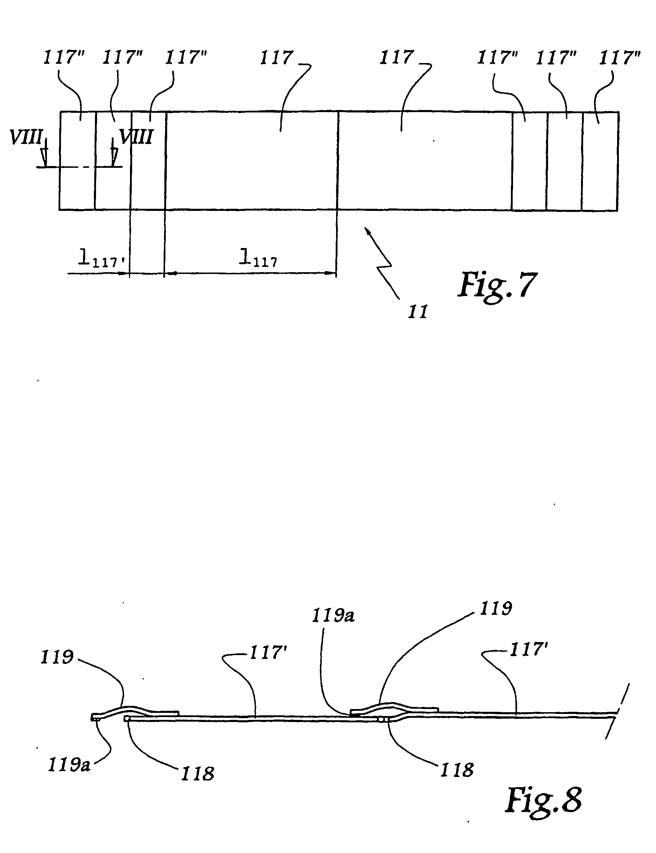

Comme il ressort plus clairement des figures 7 et 8, la bâche 11 peut être constituée de lés individuels 117 et 117' de largeurs variables. Des lés principaux 117 peuvent avoir une longueur l₁₁₇ de l'ordre de 10 mètres alors que de lés secondaires 117', de longueur l₁₁₇, de l'ordre de 2 mètres, permettent d'augmenter la longueur totale de la bâche 11, qui est donc modulable, en fonction des dimensions de la coque 1.

Les lés 117 et 117' sont accrochés ensemble grâce à des fermetures éclairs 118. Chaque lé est pourvu d'un rabat 119 permettant de recouvrir la fermeture éclair 118 adjacente de façon à rendre étanche la bâche 11. Un système 119' d'accrochage par boucles et crochets, de type VELCRO (marque déposée) est utilisé pour immobiliser chaque rabat 119 par rapport au lé 117 ou 117' adjacent.

Un déshydrateur 20 est installé dans le volume intérieur V de l'enceinte 10. Il s'agit d'un déshydrateur par adsorption équipé d'une gaine de sortie 21 pourvue de plusieurs orifices de décharge 22 répartis sur la longueur de la coque 1, la gaine courant, pour l'essentiel, selon la direction longitudinale de la coque 1. Le déshydrateur 20 est également pourvu de deux bouches 23 d'aspiration de l'air dans le volume V et d'une gaine d'évacuation 24 reliée à l'atmosphère ambiante A à travers une ouverture 25 ménagée dans l'enceinte 10. Ainsi, le déshydrateur 20 peut créer une circulation d'air dans le volume V en aspirant de l'air par les bouches 23 et en rejetant par les orifices 22 un courant d'air sec représenté par les flèche F₂, alors que de l'air chargé en humidité est rejeté vers l'extérieur comme représenté par la flèche F₃. Le courant d'air sec F₂ lèche la partie 1a devant être séchée, ce qui permet de réduire fortement le temps de séchage de la coque 1, avant la nouvelle application d'un gel-coat.

Selon un aspect non représenté de l'invention, le déshydrateur 20 peut être suspendu à l'un des étais 2.

Comme représenté à la figure 8, il est également possible de prévoir que le déshydrateur 20 est installé à l'extérieur de l'enceinte 10, par exemple sur une remorque abritée 26, auquel cas il est relié au volume intérieur V de l'enceinte 10 par sa gaine de sortie 21 et par une gaine d'extraction 27, ce qui permet de créer une circulation d'air dans le volume V, de l'air sec étant dirigé par les orifices 22 de la gaine 21 en direction de la coque 1, comme représenté par les flèches F₂, alors que de l'air humide est évacué du volume V, comme représenté par les flèches F₃ et F'₃.

Ce mode de réalisation présente l'avantage que le déshydrateur 20 n'est pas confiné dans l'enceinte 10, ce qui limite les risques d'incendie. Le déshydrateur peut être facilement déplacé, par exemple pour des raisons de sécurité. Il est équipé de clapets coupe feu 28 et 29 montés respectivement sur les gaines 21 et 27. Ainsi, en cas d'incendie, sur la remorque 26, les flammes ne se propagent pas vers l'enceinte 10 ou la coque 1.

Selon un aspect non représenté de l'invention, la remorque est équipée de coffres de rangement des éléments constitutifs de l'installation, en particulier des bâches 11 et 12, des barres 17 et des gaines 21 et 27.

Quel que soit le mode de réalisation considéré, le séchage de la coque est indirect, car c'est l'assèchement de l'air présent dans l'enceinte 10 qui provoque le séchage de la coque.

Quel que soit le mode de réalisation considéré, compte tenu de la circulation d'air F₂, F₃ créée par le déshydrateur 20, le volume intérieur V de l'enceinte 10 est en dépression par rapport à l'atmosphère ambiante A et les barres télescopiques 17 permettent d'éviter une déformation trop importante de la bâche 11 en direction de la quille 3. Cependant, l'installation peut également fonctionner alors que l'enceinte 10 est en légère surpression.

Le fait que le volume V est en dépression améliore l'« extraction » des liquides de la coque 1, qu'il s'agisse d'eau ou d'acide acétique. En outre, la dépression créée dans le volume V a pour effet de plaquer la bâche 11 contre les barres 17, ce qui évite que la bâche ne « batte » sous l'effet du vent, ce qui pourrait solliciter de façon trop violente les assemblages.

De façon avantageuse, le déshydrateur 20 est réglé pour rejeter environ 25% de l'air qu'il aspire vers l'extérieur, comme représenté par la flèche F₃. Ainsi, environ 75% de l'air aspiré est renvoyé, sous forme d'air sec, vers la coque 1. Des fuites dans l'enceinte 10 permettent d'éviter que la dépression dans le volume V soit trop importante. Ces fuites sont marginales par rapport au caractère isolant et étanche des bâches 11 et 12.

Le fait que le déshydrateur aspire de l'air dans le volume V induit un assèchement itératif de l'air qui, en devenant de plus en plus sec, permet un traitement de plus en plus efficace de la partie 1a.

Le nombre de déshydrateur(s) est bien entendu adapté au volume V et plusieurs déshydrateurs peuvent être utilisés pour les coques de grande taille.

Le déshydrateur 20 fonctionne en permanence.

Un déshumidificateur par adsorption, c'est-à-dire un déshydrateur, est tout à fait adapté au traitement d'une coque de bateau. Cependant, tout autre moyen d'assèchement de l'air peut être envisagé comme, par exemple, un déshumidificateur à principe thermodynamique de type évaporateur/condensateur, ou un absorbeur d'humidité placé dans le volume V, auquel cas il n'est pas indispensable de créer une circulation d'air.

Selon une variante non représentée de l'invention, l'enceinte 10 peut être réalisée par une ou plusieurs bâches, par exemple en polyane (marque déposée), assemblées par du ruban adhésif et fixées sur la coque par du ruban adhésif. Cette enceinte très économique n'est pas réutilisable.

Quel que soit le type de la bâche, elle est pourvue d'une porte d'accès au volume V, cette porte n'étant pas représentée sur les figures. Cette porte est utilisée, notamment, pour accéder à la partie 1a afin d'en contrôler l'assèchement.

L'enceinte 10 peut en outre être utilisée après le séchage de la coque 1, notamment pour l'application du traitement, de type gel-coat ou analogue. Dans les régions chaudes, le déshydrateur 20 peut alors être complété par un refroidisseur afin d'améliorer les conditions atmosphériques d'application du traitement qui est, le plus souvent, destiné à une application avec une température inférieure à 25°C et une hygrométrie inférieure à 50%.

Grâce à l'invention, le temps d'assèchement d'une coque de bateau peut être ramené de deux mois à une semaine, ce qui représente un gain de temps et d'argent important et permet une utilisation plus intensive des bateaux, appréciable pour les plaisanciers et pour les professionnels de la location, alors que les chantiers navals réduisent les temps d'immobilisation de leur matériel et l'encombrement de leurs aires de stationnement.

Le procédé et l'installation de l'invention ne sont pas limités au traitement curatif d'une coque de bateau. Ils peuvent être mis en oeuvre dans le cadre de mesures préventives, par exemple lors de l'hivernage de bateaux, pour drainer l'eau absorbée par une coque en cours d'une saison de navigation. Cette mise en oeuvre à titre préventif concerne, en particulier, l'allègement des bateaux de compétition.

## Revendications

1. Procédé de traitement d'une coque de bateau, ledit procédé comprenant, entre autres, une étape consistant à sécher ladite coque par son côté externe, **caractérisé en ce que**, lors de ladite étape de séchage,
- on isole au moins la partie à sécher (1a) de ladite coque (1) par rapport à l'atmosphère ambiante (A) au moyen d'une enceinte étanche (10), immobilisée sur ladite coque et qui s'étend, autour de ladite coque, depuis le sol (S) au moins jusqu'au niveau de la ligne de flottaison (1b) du bateau,
- on assèche l'air contenu dans le volume intérieur (V) de ladite enceinte et
- on fait circuler l'air contenu dans ladite enceinte (10) en dirigeant (F₂) un flux d'air sec vers ladite partie (1a) de coque (1) à sécher et en évacuant (F₃, F'₃) de l'air humide vers l'extérieur (A) de ladite enceinte.

2. Procédé selon l'une des revendications précédente, **caractérisé en ce que** l'on fait circuler l'air (F₂, F₃, F'₃), de telle sorte que le volume intérieur (V) de ladite enceinte (10) est en dépression par rapport à l'atmosphère ambiante (A).

3. Installation de traitement d'une coque de bateau par séchage, **caractérisée en ce qu'**elle comprend :
- une enceinte étanche (10) comprenant une première bâche (11) apte à être immobilisée autour de ladite coque (1), en s'étendant depuis le sol (S) au moins jusqu'au niveau de la ligne de flottaison (1b) du bateau, ladite enceinte isolant alors au moins la partie (1a) à sécher de ladite coque par rapport à l'atmosphère ambiante (A) et
- des moyens (20-27) pour assécher l'air contenu dans le volume intérieur (V) de ladite enceinte.

4. Installation selon la revendication 3, **caractérisée en ce que** ladite bâche (11) est pourvue de moyens (112) de réception d'un boudin gonflable (13) apte à être plaqué (E) contre ladite coque (1).

5. Installation selon l'une des revendications 3 ou 4, **caractérisée en ce que** ladite première bâche (11) est formée par assemblage de lés unitaires (117, 117'), chaque lé étant pourvu de moyens (118) d'accrochage réversible sur un lé adjacent et d'un rabat (119) apte à recouvrir lesdits moyens d'accrochage.

6. Installation selon l'une des revendications 3 à 5, **caractérisée en ce qu'**elle comprend au moins une barre (17) de rigidification de ladite première bâche (11), ladite barre étant engagée, par son extrémité supérieure (17a), dans un fourreau (114) prévu sur ladite première bâche.

7. Installation selon la revendication 6, **caractérisée en ce que** la barre (17) est télescopique et sa longueur est adaptable en fonction de la hauteur de la ligne de flottaison (1b) par rapport à la quille (3) de ladite coque (1).

8. Installation selon l'une des revendications 3 à 7, **caractérisée en ce qu'**elle comprend une seconde bâche (12) destinée à être posée sur le sol (S) en recouvrant un rabat (115) prévu en partie inférieure de ladite première bâche (11).

9. Installation selon la revendication 8, **caractérisée en ce que** ladite première bâche (11) est pourvue de rabats internes (116) ménagés à plusieurs hauteurs (h, h', h'') par rapport à son bord inférieur (115) et aptes chacun à recouvrir un bord (121) de la seconde bâche (12).

10. Installation selon l'une des revendications 3 à 9, **caractérisée en ce que** lesdits moyens pour assécher l'air comprennent au moins un déshydratateur (20) installé, soit dans ladite enceinte (10), soit à l'extérieur de celle-ci, ledit déshydrateur étant équipé d'une première gaine (21) de sortie, munie de plusieurs orifices (22) de décharge (F₂) d'air sec en direction de ladite partie (1a) à sécher de coque (1), et d'une seconde gaine (24, 27) d'évacuation (F₃) de l'air humide à partir de ladite enceinte.

## Patentansprüche

1. Verfahren zum Behandeln eines Schiffsrumpfes, wobei das Verfahren unter anderem einen Schritt umfasst, der darin besteht, den Rumpf von seiner Außenseite her zu trocknen,
**dadurch gekennzeichnet,**
**dass** während des Trockenschrittes
- man mindestens den zu trocknenden Bereich (1a) des Rumpfes (1) von der Umgebungsatmosphäre (A) mittels einer dichten Umhüllung (10) isoliert, die an dem Rumpf festgelegt ist und die sich um den Rumpf herum von dem Boden (S) bis mindestens zur Wasserstandslinie (1b) des Schiffes erstreckt,
- man die in dem Innenvolumen (V) der Umhüllung enthaltene Luft trocknet und
- man die in der Umhüllung (10) enthaltene Luft zirkulieren lässt, indem ein trockener Luftstrom in Richtung auf den zu trocknenden Bereich (1a) des Rumpfes (1) gerichtet (F₂) wird und indem feuchte Luft nach außen (A) bezüglich der Umhüllung abgeführt (F₃, F'₃) wird.

2. Verfahren nach einem der vorhergehenden Ansprüche, **dadurch gekennzeichnet, dass** man die Luft derart zirkulieren lässt (F₂, F₃, F'₃), dass das Innenvolumen (V) der Umhüllung (10) Unterdruck in Bezug auf die Umgebungsatmosphäre (A) aufweist.

3. Anlage zur Behandlung eines Schiffsrumpfes durch Trocknung, **dadurch gekennzeichnet, dass** sie umfasst:
- eine dichte Umhüllung (10), die eine erste Plane (11) aufweist, die geeignet ist, um den Rumpf (1) herum festgelegt zu werden, indem sie sich vom Boden (S) mindestens bis zum Niveau der Wasserstandslinie (1b) des Schiffes erstreckt, wobei die Umhüllung somit mindestens den zu trocknenden Bereich (1a) des Rumpfes in Bezug auf die Umgebungsatmosphäre (A) isoliert und
- Mittel (20-27) zum Trocknen der in dem Innenvolumen (V) der Umhüllung enthaltenen Luft.

4. Anlage nach Anspruch 3, **dadurch gekennzeichnet, dass** die Plane (11) mit Mitteln (112) zur Aufnahme eines aufblasbaren Wulstes (13) versehen ist, der geeignet ist, gegen den Rumpf (1) gedrückt zu werden.

5. Anlage nach einem der Ansprüche 3 oder 4, **dadurch gekennzeichnet, dass** die erste Plane (11) durch Zusammensetzen von Einheitsbahnen (117, 117') gebildet wird, wobei jede Bahn mit Mitteln (118) zum reversiblen Eingreifen an einer benachbarten Bahn und einer Klappe (119) versehen ist, die geeignet ist, die Mittel zum Eingreifen zu bedecken.

6. Anlage nach einem der Ansprüche 3 bis 5, **dadurch gekennzeichnet, dass** sie mindestens eine Stange (17) zum Versteifen der ersten Plane (11) umfasst, wobei die Stange mit ihrem oberen Ende (17a) in eine Stulpe (114) eingreift, die an der ersten Plane vorgesehen ist.

7. Anlage nach Anspruch 6, **dadurch gekennzeichnet, dass** die Stange (17) teleskopisch ausgebildet ist und ihre Länge der Wasserstandslinie (1b) in Bezug auf den Kiel (3) des Rumpfes (1) anpassbar ist.

8. Anlage nach einem der Ansprüche 3 bis 7, **dadurch gekennzeichnet, dass** sie eine zweite Plane (12) umfasst, die dazu dient, auf den Boden (S) gelegt zu werden, wobei eine Klappe (115) bedeckt wird, die am unteren Bereich der ersten Plane (11) vorgesehen ist.

9. Anlage nach Anspruch 8, **dadurch gekennzeichnet, dass** die erste Plane (11) mit Innenklappen (116) versehen ist, die in unterschiedlichen Höhen (h, h', h'') in Bezug auf ihren unteren Rand (115) angebracht sind und geeignet sind, jeweils einen Rand (121) der zweiten Plane (12) zu bedecken.

10. Anlage nach einem der Ansprüche 3 bis 9, **dadurch gekennzeichnet, dass** die Mittel zum Trocknen der Luft mindestens einen Entfeuchter (20) umfassen, der entweder in der Umhüllung (10) oder außerhalb derselben installiert ist, wobei der Entfeuchter mit einem ersten Austrittskanal (21), der mit mehreren Öffnungen (22) zum Ausströmen (F₂) von trockener Luft in Richtung des zu trocknenden Bereichs (1a) des Rumpfes (1) ausgerüstet ist, und mit einem zweiten Kanal (24, 27) zum Abführen (F₃) der feuchten Luft aus der Umhüllung heraus versehen ist.

## Claims

1. Method for treating the hull of a boat, the said method comprising, inter alia, a step consisting of drying the said hull via its outer side, **characterised in that**, during the said drying step:
- at least the part to be dried (1a) of the said hull is isolated from the ambient atmosphere (A) by means of a sealed enclosure (10) which is immobilised on the said hull, and extends around the said hull from the ground (S) up to at least the water line (1b) of the boat;
- the air contained in the inner volume (V) of the said enclosure is dried; and
- the air contained in the said enclosure (10) is circulated by directing (F₂) a flow of dry air towards the said part (1a) of the hull (1) to be dried and by discharging (F₃, F'₃) humid air to the exterior (A) of the said enclosure.

2. Method according to the preceding claim, **characterised in that** the air (F₂, F₃, F'₃) is circulated such that the inner volume (V) of the said enclosure (10) is under low pressure compared with the ambient atmosphere (A).

3. Installation for treating a hull of a boat by drying, **characterised in that** it comprises:
- a sealed enclosure (10) comprising a first tarpaulin (11) which can be immobilised around the said hull (1), and extends from the ground (S) up to at least the water line (1b) of the boat, the said enclosure then isolating at least the part (1a) to be dried of the said hull from the ambient atmosphere (A); and
- means (20-27) for drying the air contained in the inner volume (v) of the said enclosure.

4. Installation according to claim 3, **characterised in that** the said tarpaulin (11) is provided with means (112) for receipt of an inflatable roll (13) which can be placed (E) against the said hull (1).

5. Installation according to claim 3 or claim 4, **characterised in that** the said first tarpaulin (11) is formed by assembly of unit widths (117, 117'), each width being provided with means (118) for reversible hooking onto an adjacent width, and with a flap (119) which can cover the said hooking means.

6. Installation according to any one of claims 3 to 5, **characterised in that** it comprises at least one bar (17) for strengthening the said first tarpaulin (11), the said bar being engaged by its upper end (17a) in a sheath (114) provided on the said first tarpaulin.

7. Installation according to claim 6, **characterised in that** the bar (17) is telescopic and its length can be adapted according to the height of the water line (1b), relative to the keel (3) of the said hull (1).

8. Installation according to any one of claims 3 to 7, **characterised in that** it comprises a second tarpaulin (12) which is designed to be placed on the ground (S) and to cover a flap (115) which is provided on the inner part of the said first tarpaulin (11).

9. Installation according to claim 8, **characterised in that** the said first tarpaulin (11) is provided with inner flaps (116) which are located at several heights (h, h', h'') relative to its lower edge (115) and can each cover an edge (121) of the second tarpaulin (12).

10. Installation according to any one of claims 3 to 9, **characterised in that** the said means for drying the air comprise at least one dehumidifier (20) which is installed either in the said enclosure (10) or outside the latter, the said dehumidifier being equipped with a first output tube (21) which is provided with a plurality of apertures (22) for discharge (P₂) of dry air in the direction of the said part (1a) to be dried of the hull (1), and with a second tube (24, 27) for discharge (F₃) of humid air from the said enclosure.
